# EUROPÄISCHE PATENTSCHRIFT

(11) **EP 4 031 728 B1**
(45) Veröffentlichungstag und Bekanntmachung des Hinweises auf die Patenterteilung: **09.08.2023**
(21) Anmeldenummer: 20764087.1
(22) Anmeldetag: 01.09.2020
(51) Int. Cl.: E04G 21/04, B28B 1/00, B28B 1/52, B29C 64/00, B33Y 10/00, B33Y 70/00, B66B 23/00, E04C 3/20, E04C 5/01, E04C 5/02, E04C 5/07, B33Y 30/00

(54) **DRUCKERVORRICHTUNG ZUR ERSTELLUNG EINES BETONTRAGWERKES EINER PERSONENTRANSPORTANLAGE**
PRINTER DEVICE FOR CREATING A CONCRETE SUPPORT OF A PASSENGER TRANSPORT SYSTEM
DISPOSITIF IMPRIMANTE PERMETTANT DE PRODUIRE UNE STRUCTURE DE BÉTON D'UNE INSTALLATION DE TRANSPORT DE PERSONNES

(30) Priorität: 16.09.2019 EP 19197589
(43) Veröffentlichungstag der Anmeldung: 27.07.2022
(73) Patentinhaber: INVENTIO AG, 6052 Hergiswil (CH)
(72) Erfinder: BOROS, Csaba, 92901 Dunajska Streda (SK); WAGENLEITNER, Georg, 4575 Rossleithen (AT)
(74) Vertreter: Inventio AG
(86) Internationale Anmeldenummer: PCT/EP2020/074263
(87) Internationale Veröffentlichungsnummer: WO 2021/052742

(56) Entgegenhaltungen:
- WO-A1-2018/136475
- CN-A- 109 079 955
- CN-B- 108 103 952

## Beschreibung

Die Erfindung betrifft ein Verfahren zur Erstellung eines Betontragwerkes einer als Fahrtreppe oder Fahrsteig ausgestalteten Personentransportanlage. Personentransportanlagen, die als Fahrtreppen oder als Fahrsteige ausgestaltet sind, werden in Bauwerken des öffentlichen Bereichs wie beispielsweise in Bahnhöfen, U-Bahnhöfen, Flughäfen sowie in Shoppingmalls, Kulturzentren und dergleichen mehr, eingesetzt. Fahrtreppen oder Fahrsteige weisen eine tragende Struktur auf, die als Tragwerk bezeichnet wird. Meistens ist dieses Tragwerk eine Fachwerkkonstruktion, welche beim Hersteller als ganze Einheit oder in Tragwerkmodule unterteilt, hergestellt wird. Das Tragwerk oder dessen Tragwerkmodule beziehungsweise Fachwerkmodule werden in ein Bauwerk eingebaut, wobei das Tragwerk zum Beispiel zwei Etagen des Bauwerkes verbindet. In diesem Tragwerk sind die bewegbaren Komponenten der Fahrtreppe oder des Fahrsteiges angeordnet, beispielsweise ein Stufenband oder ein Palettenband, Umlenkachsen, eine Antriebswelle sowie der Antriebsmotor mit Getriebe, dessen Steuerung, Überwachungssysteme, Sicherheitssysteme und dergleichen mehr. Ferner werden auch feststehende Komponenten wie beispielsweise Balustraden, Kammplatten, Lagerstellen, Laufbahnen und Führungsschienen mit dem

Tragwerk fest verbunden. Wenn das Tragwerk in Tragwerkmodule unterteilt wird, bedeutet jede dadurch gebildete Trennstelle einen erheblichen Mehraufwand an Material, Fertigungszeit und Montagezeit. Deshalb werden möglichst Trennstellen vermieden oder deren Anzahl möglichst klein gehalten, was dazu führt, dass dieses Bauteil mit seinen sehr grossen Dimensionen vom Herstellungsort zum Einsatzort befördert wird. Dadurch entsteht ein grosses Transportvolumen, welches vergleichsweise hohe Transportkosten verursacht.

Fahrtreppen und Fahrsteige der vorgenannten Art oder deren Module sind deshalb grosse sperrige Teile, die aufgrund ihrer Struktur nicht beliebig zerlegt in ein Bauwerk eingebracht werden können. Wie vorangehend erwähnt, nimmt das Tragwerk sämtliche Bauteile der Fahrtreppe auf und stützt diese an zwei gegeneinander gerichteten Auflagerstellen im Bauwerk ab. Mit anderen Worten bedeutet dies, dass das Tragwerk sich über die gesamte geplante Länge der Personentransportanlage erstreckt.

Bei neu zu erstellenden Bauwerken werden üblicherweise während des Bauvorganges die Fahrtreppen und Fahrsteige, sobald deren bauwerkseitig erstellten Auflagerstellen vorhanden sind, eingesetzt und dann umschliessende Wände und Decken höherer Etagen weitergebaut. Dies deshalb, weil diese Personentransportanlagen aus den vorgenannten Gründen als sehr grosse Bauteile ins Bauwerk eingebaut werden und so gross sind, dass sie nur mit Schwierigkeit durch vorhandene Öffnungen ins Gebäude eingebracht werden könnten.

Bei bestehenden Gebäuden jedoch fehlt diese Möglichkeit, eine grosse Fahrtreppe oder einen grossen Fahrsteig in das Gebäude einzubringen, ohne an der Gebäudehülle, beispielsweise an Wänden, Teile auszubrechen und Öffnungen zu schaffen, um die grossen Bauteile einzuführen. Auch bei U-Bahnstationen kann dieses Problem vorhanden sein, weil dort Tunnel in den Untergrund geschlagen werden und in diesen Tunneln die Fahrtreppen und Fahrsteige installiert werden müssen.

Ein weiteres Problem besteht darin, solche Personentransportanlagen, die im Herstellerwerk komplett zusammengebaut und als Ganzes geliefert werden, zu transportieren. Hierbei müssen grosse Lastwagen eingesetzt werden, wobei das grosse Volumen dieser Anlagen dazu führen kann, dass während des Transportes auch Verkehrswege gesperrt und bestimmte Verkehrsbehinderungen in Kauf genommen werden müssen. Die Dokumente WO2018/136475 A1, CN109079955 A und CN108103952 B offenbaren 3D-Betondruckereinrichtungen zum Erstellen von Betonbauteilen für oder an Gebäuden.

Um die vorangehend aufgeführten Probleme zu vermeiden, werden oft Personentransportanlagen der vorgenannten Art in zerlegtem Zustand in das Bauwerk eingeführt und dort erst zusammengesetzt. Allerdings besteht hier das Problem, dass das üblicherweise als Fachwerk ausgeführte Tragwerk, welches der grösste Teil einer Fahrtreppe oder eines Fahrsteiges darstellt, nicht beliebig zerlegt werden kann. Auch wenn das Tragwerk in zwei oder drei Sektionen zerlegt angeliefert und ins Gebäude verbracht wird, ist es dennoch möglich, dass gewisse Teile des Bauwerkes ausgebrochen werden müssen. Zudem stellt jede Schnittstelle des Tragwerks, an dem die Sektionen zusammengebaut werden, einen erheblichen Mehraufwand dar, da diese besonders verstärkt werden muss, damit die Schnittstelle dieselbe Tragfähigkeit aufweist wie die anderen Teile des Tragwerks.

Aufgrund dieser Probleme kann die Aufgabe der vorliegenden Erfindung darin gesehen werden, Möglichkeiten zu schaffen, ein Tragwerk in ein bestehendes Gebäude oder Bauwerk einzubringen, ohne dass Teile des Gebäudes ausgebrochen werden müssen oder dass das Tragwerk in Sektionen unterteilt ins Gebäude eingebracht werden muss.

Diese Aufgabe wird gelöst durch ein Verfahren zur Erstellung eines Betontragwerkes einer als Fahrtreppe oder Fahrsteig ausgestalteten Personentransportanlage in einem bestehenden Bauwerk.

Zur Druckervorrichtung, welche an sich keinen Teil der Erfindung darstellt, gehört eine Druckerführungsvorrichtung, die zwischen zwei zur Abstützung der Personentransportanlage vorgesehenen Auflagerstellen des Bauwerkes angeordnet werden kann. Hierbei ist die Druckerführungsvorrichtung dazu ausgebildet, zumindest während des Druckvorganges an den mit der Personentransportanlage zu verbindenden Etagen des Bauwerkes abzustützen. Mit anderen Worten stützt die Druckerführungsvorrichtung zumindest während der Durchführung des Druckvorganges auf die mit dem Betontragwerk zu verbindenden Etagen des Bauwerkes ab.

Vorzugsweise wird dabei die Druckerführungsvorrichtung im Bereich der Auflagerstellen am Bauwerk abgestützt, so dass die beiden Auflagerstellen gewissermassen durch die Druckerführungsvorrichtung überbrückt werden. Hierzu weist die Druckerführungsvorrichtung Einstellmittel auf, durch welche die Druckerführungsvorrichtung auf die beiden Auflagerstellen eingestellt und ausgerichtet werden kann. Dadurch dass die Druckerführungsvorrichtung an den zur Verbindung vorgesehenen Etagen abstützt, kann diese ohne riesigen Aufwand direkt auf die Auflagerstellen ausgerichtet werden, was zu einer hohen Fertigungspräzision des zu erstellenden Betontragwerkes führt.

Des Weiteren umfasst die Druckervorrichtung eine 3D-Betondruckereinrichtung, die entlang der Druckerführungsvorrichtung bewegbar geführt an dieser angeordnet werden kann. Die 3D-Betondruckereinrichtung ist dazu ausgestaltet, verarbeitbaren Beton räumlich anzuordnen. Hierzu weist die 3D-Betondruckereinrichtung zumindest eine Druckerdüse, eine Bewegungsvorrichtung zum Bewegen der Druckerdüse sowie eine Druckersteuerung auf. Durch die Druckersteuerung kann die Bewegungsvorrichtung die Betonzufuhr durch die Druckerdüse sowie die Bewegungen der ganzen 3D-Betondruckereinrichtung entlang der Druckerführungsvorrichtung gesteuert werden. Zur Steuerung dient eine Steuerungssoftware, die zur Durchführung des Druckvorganges während der Erstellung des Betontragwerkes auf der Druckersteuerung ausgeführt werden kann.

Wie bereits eingangs erwähnt, ist das Tragwerk der grösste Bauteil der Personentransportanlage. Durch die erfindungsgemässe Vorrichtung kann dieses grösste Teil direkt im Bauwerk erstellt werden. Dadurch lässt sich das Transportvolumen der Personentransportanlage von der Herstellerfabrik zum Bauwerk, in dem die Personentransportanlage eingebaut und betrieben werden soll, stark reduzieren. Zudem wird hierdurch auch ein sogenannter, lokaler Fertigungsteil für heimische Unternehmen erreicht, der bei vielen öffentlichen Vergaben gefordert wird. Alle übrigen Komponenten der Personentransportanlage können dann im erstellten Betontragwerk verbaut werden, was den Lokalfertigungsanteil nochmals erheblich erhöht.

Mit anderen Worten kann die Druckerführungsvorrichtung an beiden Auflagerstellen abstützend angeordnet werden. Hierdurch kann die 3D-Betondruckereinrichtung bereits eindeutig zu den Auflagerstellen positioniert werden und kann ausgehend von einer Auflagerstelle hin zur nächsten Auflagerstelle das Betontragwerk drucken beziehungsweise errichten.

Vorzugsweise ermöglichen die Einstellmittel auch, dass die Druckerführungsvorrichtung der ungefähren Erstreckung des Betontragwerkes folgend, eingestellt werden kann. Dies hat den Vorteil, dass die Druckervorrichtung insgesamt kompakt, formstabil und trotzdem leicht gebaut werden kann, da hierdurch für die 3D-Betondruckereinrichtung beispielsweise keine lang ausladenden Arme der Bewegungsvorrichtung zur Führung der Druckerdüse erforderlich sind. Hierbei bedeutet der Begriff «der ungefähren Erstreckung des Betontragwerkes folgend» eine der Längserstreckung des zu druckenden Betontragwerkes angenäherter Streckenverlauf der Druckerführungsvorrichtung.

In einer weiteren Ausführung kann die Druckerführungsvorrichtung der Druckervorrichtung nach dem Druckvorgang als Bewehrung oder Teil einer Bewehrung des Betontragwerkes im Betontragwerk verbleibend angeordnet sein. Hierdurch kann dieser Teil der Druckerführungsvorrichtung bereits tragende Funktion übernehmen und den noch nicht abgebundenen Teil der verarbeiteten Betonmasse stützen. Die Druckerführungsvorrichtung erfüllt somit nicht nur eine Führung der 3D-Betondruckereinrichtung zu sein, sondern auch das Betontragwerk im erstellen Zustand zu stützen und zu verstärken.

In einer alternativen Ausführung kann die Druckerführungsvorrichtung der Druckervorrichtung selbstverständlich auch nur zur Durchführung des Druckvorganges temporär zwischen den Auflagerstellen angeordnet sein. Nach dem Druckvorgang wird diese wieder vollständig entfernt.

Personentransportanlagen wie Fahrtreppen oder Fahrsteige können auch in Bauwerken eingebaut sein, welche in seismisch aktiven Gebieten stehen oder errichtet werden. Die in Erdbebengebieten errichteten Bauwerke unterliegen speziellen Bauvorschriften und sind für diese Belastungen speziell ausgebildet. Um Schäden zu vermeiden, können bei Erdbeben deshalb Bewegungen zwischen einzelnen Etagen des Bauwerkes relativ zueinander erfolgen. In einer weiteren Ausgestaltung der vorliegenden Erfindung kann deshalb durch den Druckvorgang und gegebenenfalls unter Einbezug von Lagerbauteilen, an einer der beiden Auflagerstellen ein Schwenklager und an der anderen Auflagerstelle ein Gleitlager zwischen dem Betontragwerk und der jeweiligen Auflagerstelle ausgebildet werden. Das bedeutet, dass die Auflagerstellen hierzu einen speziellen Druckvorgang erfordern, so dass beispielsweise weitere Bauteile aus Metall in das Betontragwerk integriert werden, welche dann diese Lagerstellen bilden. Das Schwenklager kann so ausgebildet sein, dass es Schwenkbewegungen der Personentransportanlage um eine vertikale Achse ermöglicht. Das Gleitlager an der anderen Auflagerstelle stützt die Personentransportanlage an diesem Ende nur gegen vertikale Kräfte ab, hingegen kann es sich dort in horizontaler Ebene in allen Richtungen bewegen.

In einer weiteren Ausführung können durch den Druckvorgang Aufnahmen für Bauteile der Personentransportanlage erzeugt werden. Diese Aufnahmen dienen dazu, dass Bauteile der Personentransportanlage, die fix mit dem Betontragwerk verbunden werden müssen, besser aufgenommen werden können, ohne am Betontragwerk zu bohren und Ankerdübel zu setzen oder sonstige Arbeiten durchführen zu müssen, um geeignete Befestigungsbereiche für weitere Bauteile der Personentransportanlage zu schaffen. Des Weiteren können aber auch Führungselemente für bewegbare Bauteile der Personentransportanlage durch den Druckvorgang direkt erzeugt werden. Insbesondere können hierbei Führungselemente wie Führungsschienen, Gegenführungsschienen, Umlenkführungsschienen und dergleichen mehr durch den Druckvorgang erzeugt werden. Gegebenenfalls müssen diese Führungselemente beispielsweise durch Schleifen oder durch Anbringen einer besonderen Schicht weiterbearbeitet werden, so dass die Führungen einen glatten ruhigen Lauf der bewegten Teile ermöglichen.

In einer weiteren Ausführung kann die Druckervorrichtung eine Bewehrungszuführvorrichtung aufweisen, durch welche während des Druckvorganges Bewehrungsmaterial zugeführt werden kann. Das bedeutet, dass das Betontragwerk nicht nur rein aus Beton gefertigt ist, sondern dass auch weitere Teile in der Betonmasse eingeschlossen werden, damit Zugkräfte im Betontragwerk besser aufgenommen werden können.

Erfindungsgemäß ist ein Verfahren zur Erstellung eines Betontragwerkes einer als Fahrtreppe oder Fahrsteig ausgestalteten Personentransportanlage gemäß Anspruch 1.

Hierbei wird in einem bestehenden Bauwerk eine Druckervorrichtung zum dreidimensionalen Betondrucken eingebracht. Das Einbringen der Druckervorrichtung geschieht dadurch, dass zwischen zwei zur Abstützung der Personentransportanlage vorgesehenen Auflagerstellen des Bauwerkes, eine Druckerführungsvorrichtung der Druckervorrichtung angeordnet wird. Mit dieser Druckerführungsvorrichtung wird eine 3D-Betondruckereinrichtung verbunden, welche entlang dieser Druckerführungsvorrichtung zwischen den beiden Auflagerstellen verschiebbar geführt ist. Sobald die Druckervorrichtung aufgestellt und installiert ist, kann mit dieser durch einen Druckvorgang ein Betontragwerk erstellt werden, welches sich zwischen den beiden Auflagerstellen erstreckt.

Wie bereits erwähnt, kann zumindest ein Teil der Druckerführungsvorrichtung als Bewehrung oder Teil der Bewehrung im Betontragwerk verbleiben, indem diese vor dem Druckvorgang auf den Auflagerstellen des Bauwerkes angeordnet wird und der verbleibende Teil dieser Druckerführungsvorrichtung durch den Druckvorgang im Betontragwerk eingelassen wird. Dies bedeutet, dass beispielsweise die gesamte Druckerführungsvorrichtung die gesamte Bewehrung oder einen Teil der Bewehrung des Betontragwerkes bilden kann. Es kann aber auch sein, dass nur ein Teil der Druckerführungsvorrichtung als Bewehrung vom Beton während des Druckvorganges eingeschlossen wird und nur dieser eingeschlossene Teil als Bewehrung des Betontragwerkes dient. Der Rest der Druckerführungsvorrichtung wird in diesem Fall von den eingeschlossenen Teilen der Druckerführungsvorrichtung nach dem Druck getrennt und kann gegebenenfalls für einen weiteren Druckvorgang wiederverwendet werden.

Es kann aber auch sein, dass gar kein Teil der Druckerführungsvorrichtung im Betontragwerk eingeschlossen wird und diese lediglich dazu dient, die 3D-Betondruckereinrichtung zwischen den beiden Auflagerstellen zu führen. Mit anderen Worten kann die Druckerführungsvorrichtung der Druckervorrichtung nur temporär zwischen den Auflagerstellen verbleiben, indem diese vor dem Druckvorgang beim Anordnen im Bauwerk auf die Auflagerstellen ausgerichtet wird und nach dem Druckvorgang wieder entfernt wird.

Wie bereits erwähnt, können gegebenenfalls unter Einbezug von Lagerbauteilen an einer der beiden Auflagerstellen ein Schwenklager und an der anderen Auflagerstelle ein Gleitlager während des Druckvorganges am Betontragwerk ausgebildet werden. Dabei sind aber nicht zwingend weitere Bauteile zum Beispiel aus Stahl notwendig. Je nach Druckerprogramm, je nach Betonqualität und je nach vorgegebenem Bewehrungsplan kann das Schwenklager sowie das Gleitlager rein durch den Druckvorgang und das Einbringen allfälliger Bewehrung in den Auflagerstellen erzeugt werden.

Vorzugsweise wird durch das Verfahren ein Betontragwerk erzeugt, welches quer zu seiner Längserstreckung einen nach oben offenen U-förmigen Querschnitt aufweist. Mit anderen Worten weist ein solches Betontragwerk zwei Seitenwände auf, welche durch einen Boden miteinander verbunden sind. Durch den Druckvorgang können zum Beispiel in den Seitenwänden Führungselemente ausgebildet werden, welche zur Führung bewegter Bauteile der Personentransportanlage dienen. Ebenso können Aufnahmen für Bauteile der Personentransportanlage mitgedruckt werden, wobei in diese Aufnahmen mindestens ein Befestigungselement, vorzugsweise aus Metall oder aus einem Polymerwerkstoff, während des Druckens eingelassen werden kann. Dieses Befestigungselement kann ein Bolzen, ein Gewindebolzen, eine Lasche, ein Hebel, eine Stange, ein Anker und dergleichen mehr sein.

Sofern die Druckervorrichtung über eine Bewehrungszufuhrvorrichtung verfügt, kann während des Druckvorganges Bewehrungsmaterial durch diese zugeführt werden. Dieses Bewehrungsmaterial können beispielsweise Bewehrungsfasern aus Stahl oder Kunststoff sein. Es können aber auch Drähte sein, welche in geeigneter Weise in das Betonmaterial gesteuert eingebracht werden. Hierzu folgt vorzugsweise die Bewehrungszuführvorrichtung einem Bewehrungsplan, welcher in der Steuerungssoftware implementiert ist.

Sobald das Betontragwerk der Personentransportanlage durch die Druckervorrichtung erstellt worden ist, kann die Druckervorrichtung abgebaut werden und nach einer entsprechenden Verfestigungszeit, kann das Betontragwerk mit den weiteren Bauteilen der Personentransportanlage zur fertigen, einsatzbereiten Personentransportanlage ergänzt werden.

Nachfolgend werden Ausführungsformen zum Verständnis des erfindungsgemäßen Verfahrens unter Bezugnahme auf die beigefügten Zeichnungen beschrieben, wobei weder die Zeichnungen noch die Beschreibung als die Erfindung einschränkend auszulegen sind. Es zeigen:
- Figur 1:: schematisch eine Druckervorrichtung mit einer Druckerführungsvorrichtung, einer 3D-Betondruckeinrichtung und einer Bewehrungszuführvorrichtung,
- Figur 2:: schematisch einen Abschnitt eines Betontragwerkes während des Druckvorganges mit einer Druckervorrichtung;
- Figur 3:: schematisch eine Druckerführungsvorrichtung mit damit verbindbarer 3D-Betondruckeinrichtung;
- Figur 4:: schematisch einen Abschnitt eines Betontragwerkes mit als Bewehrung dienenden Drähten, welche durch eine Bewehrungszuführvorrichtung der Druckervorrichtung entsprechend einem Bewehrungsplan in die Betonmasse eingebracht wurden;
- Figur 5:: schematisch eine mögliche Ausgestaltung einer Düse mit einer Bewehrungszuführvorrichtung, welche Bewehrungsdrähte durch die Düse zuführt;
- Figur 6:: schematisch eine Ergänzung der in der Figur 5 dargestellten Bewehrungszuführvorrichtung, so dass nicht nur in Längserstreckung des Betontragwerkes Bewehrungsdrähte zugeführt werden können, sondern auch diese in Längserstreckung in der verarbeiteten Betonmasse angelegten Bewehrungsdrähte mit weiteren Bewehrungsdrähten in Querrichtung miteinander verbinden kann.

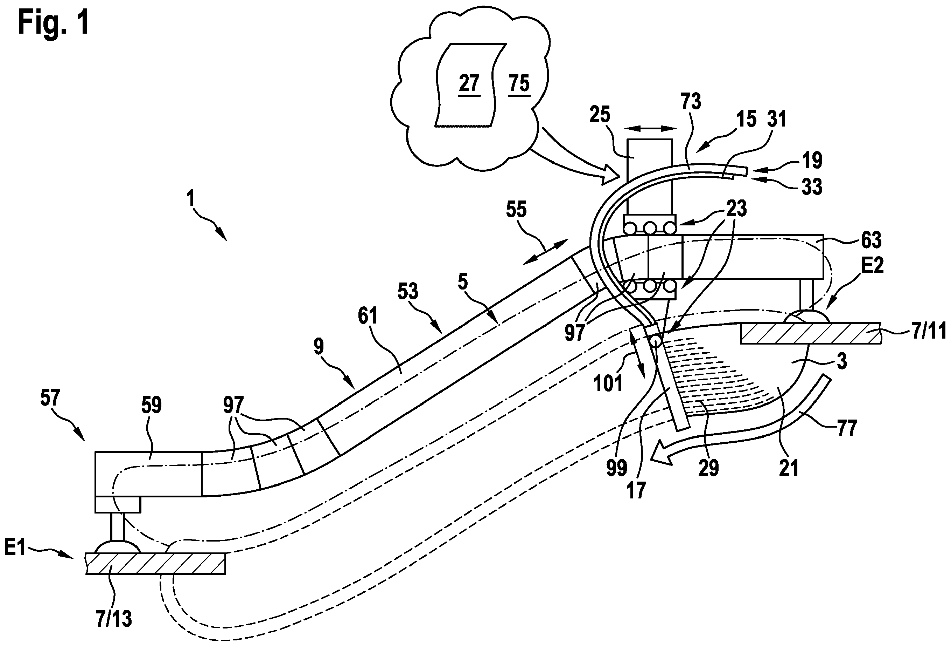

In der Figur 1 ist eine Druckervorrichtung 1 mit einer Druckerführungsvorrichtung 9, einer 3D-Betondruckeinrichtung 15 und einer Bewehrungszuführvorrichtung 31 schematisch dargestellt. Des Weiteren zeigt die Figur 1 zwei auf unterschiedlichen Ebenen angeordnete Etagen E1, E2 eines Bauwerkes 7, welche durch eine Personentransportanlage 5 miteinander verbunden werden sollen.

Diese Personentransportanlage 5 ist, weil sie noch nicht erstellt wurde, mittels strichpunktierter Linie dargestellt. Um diese Personentransportanlage 5 zu erstellen, muss zwischen diesen beiden Etagen E1, E2 eine tragende Konstruktion eingebracht werden. Als tragende Konstruktion ist ein Betontragwerk 3 vorgesehen.

Um dieses Betontragwerk 3 gegen die Schwerkraft im Bauwerk 7 abzustützen, sind zwei Auflagerstellen 11, 13 vorhanden, welche bauseitig auf den übereinander angeordneten Etagen E1, E2 des Bauwerkes 7 ausgebildet sind. Wie die Figur 1 zeigt, wird zur Erstellung des Betontragwerkes 3 der Personentransportanlage 5 die Druckerführungsvorrichtung 9 zwischen den beiden Etagen E1, E2 bzw. zwischen der Auflagerstelle 11 der oberen Etage E2 und der Auflagerstelle 13 der unteren Etage E1 angeordnet.

Die Druckerführungsvorrichtung 9 weist eine Tragkonstruktion 57 auf, an welcher zumindest eine Führungsbahn 53 ausgebildet ist. Die Form der Tragkonstruktion 57 in der dargestellten Seitenansicht der Figur 1, gibt annähernd den späteren Verlauf der Längserstreckung des Betontragwerkes 3 wieder. Die Tragkonstruktion 57 weist hierzu einen ersten Abschnitt 59, einen zweiten Abschnitt 61 und einen dritten Abschnitt 63 auf, die in ihrer Längserstreckung gerade ausgebildet sind und die mittels Winkelsegmenten 97 miteinander verbunden werden können. Je nach Anzahl verwendeter Winkelsegmente 97, können die seriell miteinander verbundenen Abschnitte 59, 61, 63 beziehungsweise deren nicht dargestellte Mittellängsachsen, winklig zueinander eingestellt werden. Mit anderen Worten sind durch die Anzahl verwendeter Winkelsegmente 97, verschiedene Steigungen des zweiten Abschnitts 61 einstellbar. Des Weiteren kann auch ein Set aus verschieden langen Abschnitten 59, 61, 63 vorhanden sein, um daraus eine auf die Verhältnisse vor Ort abgestimmte Druckerführungsvorrichtung 9 zu erstellen. Sowohl die Abschnitte 59, 61, 63 als auch die Winkelsegmente 97 stellen nebst der Abstützungs- und Führungsfunktion somit auch Einstellmittel dar, damit die Druckerführungsvorrichtung 9 auf die beiden, auf unterschiedlichen Etagen E1, E2 angeordneten Auflagerstellen 11, 13 einstellbar und ausrichtbar ist und auf diesen abstützend, angeordnet werden kann.

Wie bereits erwähnt, umfasst die Druckervorrichtung 1 auch eine 3D-Betondruckereinrichtung 15, welche an der Druckerführungsvorrichtung 9 entlang eines Führungsweges 55 verschiebbar geführt ist. Die 3D-Betondruckereinrichtung 15 kann hierbei mittels einer Bewegungsvorrichtung 23 entlang des Führungsweges 53 bewegt werden.

Die 3D-Betondruckereinrichtung 15 verfügt ferner über eine Druckerdüse 17. Die Druckerdüse 17 kann mit einer Betonfördereinrichtung 73 verbunden werden, durch welche Betonfördereinrichtung 73 verarbeitbarer Beton 19 der Druckerdüse 17 zugeführt werden kann. Von dieser Betonfördereinrichtung 73 ist nur der Schlauch dargestellt, welcher üblicherweise mit einem Transportgefährt, beispielsweise einem Lastwagen, verbunden ist, der den frischen Beton an die Baustelle transportiert hat. Auch die Druckerdüse 17 wird mittels der Bewegungsvorrichtung 23 beweglich am Rest der 3D-Betondruckereinrichtung 15 geführt, symbolisch dargestellt durch den Doppelpfeil 101 und den Schwenkmechanismus 99.

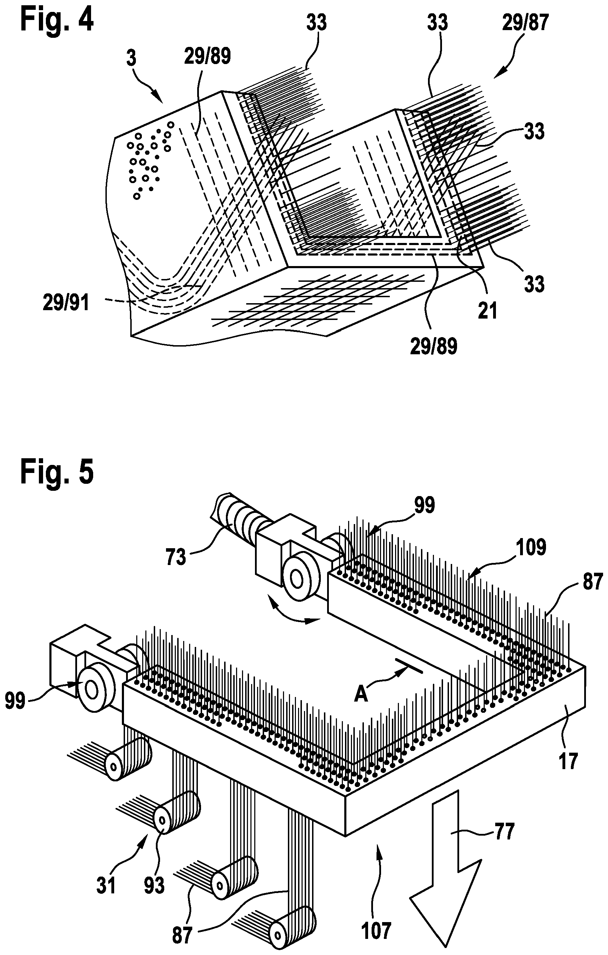

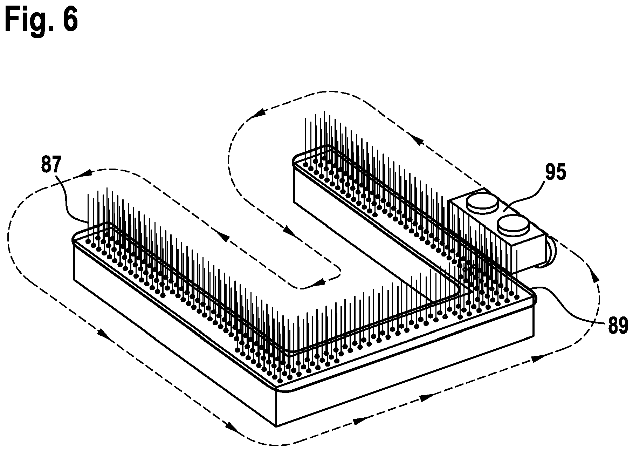

Mit der Druckerdüse 17 ist zudem die Bewehrungszuführvorrichtung 31 verbunden, so dass dieser Bewehrungsteile 33 zugeführt werden können. Die dargestellte Druckerdüse 17 wird weiter unten im Zusammenhang mit den Figuren 5 und 6 noch detaillierter beschrieben.

Zur Koordinierung der für den Druckvorgang erforderlichen Bewegungen der Bewegungsvorrichtung 23, weist die Druckervorrichtung 1 eine Druckersteuerung 25 auf. Die Druckersteuerung 25 führt dabei Steuerbefehle aus, welche in einer Steuerungssoftware 27 implementiert sind. Diese Steuerungssoftware 27 kann beispielsweise aus einer Datenwolke (Cloud) 75 heruntergeladen werden. Die Steuerungssoftware 27 enthält hierbei sämtliche Bewegungsabläufe sowohl der 3D-Druckervorrichtung 15 relativ zur Druckerführungsvorrichtung 9 als auch der Druckerdüse 17 relativ zum Rest der 3D-Druckervorrichtung 15. Ferner steuert die Druckersteuerung 25 gemäss der Steuerungssoftware 27 die Zufuhr von verarbeitbarem Beton 19 und von Bewehrungsmaterial 33 zur Druckerdüse 17.

Wie in der Figur 1 dargestellt, ist die Druckervorrichtung 1 mitten im Verfahren zur Erstellung des Betontragwerkes 3. Hierbei ist der bereits erstellte Teil des Betontragwerkes 3 mit ausgezogener Linie dargestellt, während der noch nicht erstellte Teil des Betontragwerkes 3 mit unterbrochener Linie dargestellt ist. Der bereits erstellte Teil des Betontragwerkes 3 zeigt den bereits verarbeiteten Beton 21 sowie die andeutungsweise dargestellte, bereits verbaute Bewehrung 29, welche gemäss dem bereits erfolgten Druckvorgang 77 eingebracht wurde.

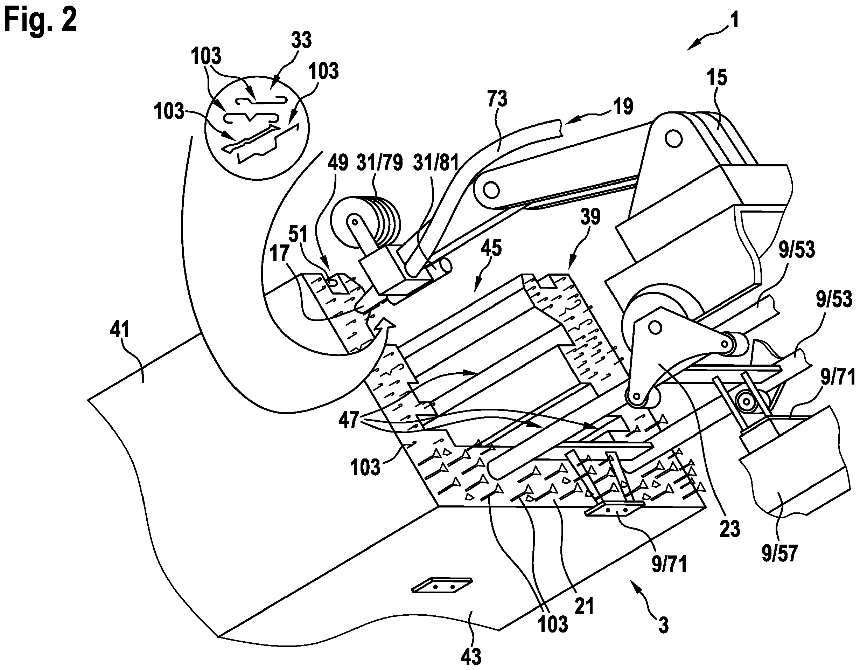

Die Figur 2 zeigt eine alternative Ausgestaltung der Druckervorrichtung 1. Deren Druckerführungsvorrichtung 9 weist eine Tragkonstruktion 57 sowie zwei Führungsbahnen 53 auf, welche über Verbindungsstellen 71 mit der Tragkonstruktion 57 verbunden sind.

An den Führungsbahnen 53 ist durch eine Bewegungsvorrichtung eine 3D-Betondruckereinrichtung 15 entlang den Führungsbahnen beweglich geführt angeordnet. Die 3D-Betondruckereinrichtung 15 ist ein umgebauter Industrieroboter, welcher mit weiteren Teilen versehen ist. Diese weiteren Teile sind eine Druckerdüse 17 sowie eine Bewehrungszuführvorrichtung 31. Die Druckerdüse 17 ist wiederum mit einer Betonfördereinrichtung 73 verbunden.

Anders als im vorangehenden Beispiel der Figur 1, wird im Beispiel der Figur 2 das Bewehrungsmaterial 33 nicht in Form von Bewehrungsdrähten, sondern in Form von Bewehrungsfasern 103 in den verarbeitbaren Beton 19 eingebracht. Das Bewehrungsmaterial 33 in Form von Bewehrungsfasern 103 wird in der Bewehrungszufuhrvorrichtung 31 aus Halbzeugmaterial 79 fortlaufend gefertigt. Im vorliegenden Ausführungsbeispiel liegt das Halbzeugmaterial 79 als Draht aufgewickelt auf einer Drahtrolle vor, welches durch die Bewehrungszuführvorrichtung 31 in geeignete Länge und geeignete Form gebracht wird. Wie dargestellt, können die Bewehrungsfasern 103 verschiedene Formen annehmen. Dies hat den Vorteil, dass je nach Einsatzort die Form und Länge der Bewehrungsfasern 103 variiert werden kann. Nach dem Ablängungs- und Verformungsprozess des Bewehrungsmaterials 33 wird dieses einer Schiessvorrichtung 81 der Bewehrungszuführvorrichtung 31 zugeführt und diese am richtigen Ort und mit der richtigen Schussenergie in den noch weichen, von der Düse aufgetragenen beziehungsweise verarbeiteten Beton 21, eingebracht. Sowohl die Bewegungsvorrichtung 23 als auch die 3D-Druckervorrichtung 15 und die Bewehrungszuführvorrichtung 31 werden wiederum durch eine nicht dargestellte Druckersteuerung sowie die zugehörende Steuerungssoftware gesteuert.

Der bereits durch die Druckervorrichtung 1 erzeugte Teil des Betontragwerkes 3 weist einen U-förmigen Querschnitt 45 auf. Dieser wird gebildet durch zwei Seitenwände 41, 39, die durch einen Boden 43 miteinander verbunden sind. Wie deutlich ersichtlich ist, werden die beiden Führungsbahnen 53 der Druckerführungsvorrichtung 9 durch den Druckvorgang mit eingeschlossen. Nach der kompletten Erstellung des Betontragwerkes 3, kann der Rest der Druckerführungsvorrichtung 9, nämlich die Tragkonstruktion 57, durch die Trennung der Verbindungsstellen 71 vom Betontragwerk 3 gelöst werden. Somit ist ein Teil der Druckerführungsvorrichtung 9 Teil des Bewehrungsmaterials 33 des fertig erstellten Betontragwerkes 3.

Ein besonderer Vorteil des Druckens des Betontragwerkes 3 besteht darin, dass vorteilhafte Ausgestaltungen des Betontragwerkes 3 gleich mitgedruckt werden können. Einerseits können dies freie Aussenformen des Bodens 43 und der Seitenwände 39, 41 sein, die nach den Wünschen des Architekten frei formbar sind. Zum anderen können wie im vorliegenden Ausführungsbeispiel der Figur 2 dargestellt, durch den Druckvorgang funktionsrelevante Konturen wie beispielsweise die dargestellten Führungselemente 74 mitgedruckt werden. Diese Führungselemente 47 dienen als Führungsschienen für das innerhalb des Betontragwerkes 3 beweglich anzuordnende Stufenband oder Palettenband (nicht dargestellt) der Personentransportanlage 5. Ferner können auch Aufnahmen 49 mitgedruckt werden. In diese Aufnahmen 49 können Befestigungselemente 51 eingelassen sein, an welchen weitere Bauteile der Personentransportanlage 3 befestigt werden können.

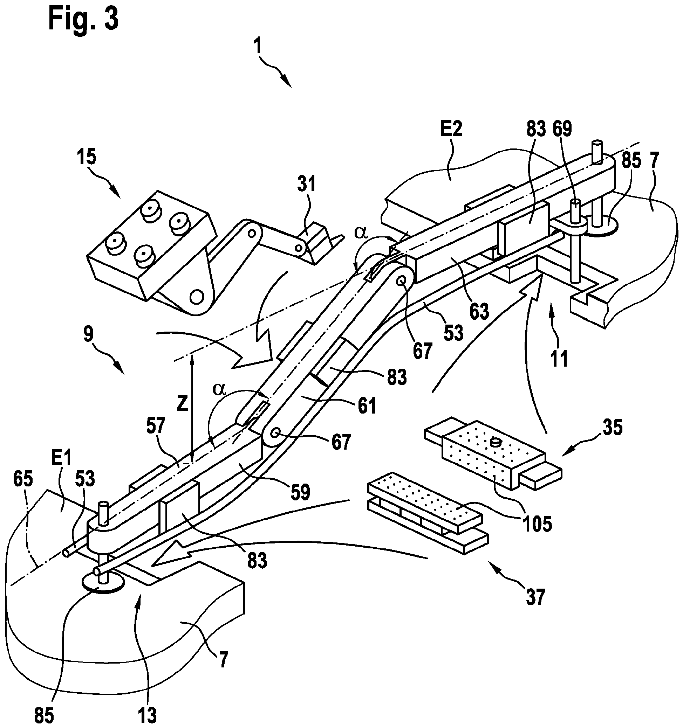

Die Figur 3 zeigt eine weitere mögliche Ausgestaltung der Druckervorrichtung 1. Wiederum sind zwei Etagen E1, E2 des Bauwerkes 7 dargestellt. An jeder dieser Etagen E1, E2 ist eine Auflagerstelle 11, 13 ausgebildet. Zwischen den beiden Auflagerstellen 13, 11 ist eine Druckerführungsvorrichtung 9 der Druckervorrichtung 1 angeordnet. Die Druckerführungsvorrichtung 9 dient zur Führung einer 3D-Betondruckereinrichtung 15, die Teil der Druckervorrichtung 1 ist und bereits ausführlich im Zusammenhang mit der Figur 2 beschrieben wurde. Im Unterschied zur Druckervorrichtung 1 der Figur 2, wird in der Figur 3 die 3D-Betondruckereinrichtung 15 nicht «stehend», sondern «hängend» an der Druckerführungsvorrichtung 9 geführt.

Die Druckerführungsvorrichtung 9 weist drei Abschnitte 59, 61, 63 auf. Der erste Abschnitt 59 weist eine Stütze 85 auf, welche auf der Etage E1 angeordnet ist. Der dritte Abschnitt 63 weist ebenso eine Stütze 85 auf, die auf der zweiten Etage E2 des Bauwerkes 7 abgestützt ist. Der erste Abschnitt 59 und der dritte Abschnitt 63 sind mittels des zweiten Abschnitts 61 miteinander über Gelenkstellen 67 verbunden. Dadurch lässt sich der Niveauunterschied zwischen der Etage E1 und der Etage E2 an der Druckerführungsvorrichtung 9 einstellen, wie dies mit dem Höhenmass Z symbolisch dargestellt ist. Wie mittels der Mittellängsachse der Druckerführungsvorrichtung 9 gezeigt wird, ermöglichen die Gelenkstellen 67 eine winklige Einstellung α des zweiten Abschnitts 61 zum dritten Abschnitt 63 und zum ersten Abschnitt 59. Diese durch die Abschnitte 59, 61, 63 und die Gelenkstellen 67 gebildete Tragkonstruktion der Druckerführungsvorrichtung 9 stützt die beiden Führungsbahnen 53, welche mittels Justierträger 83 einstellbar an der Tragkonstruktion 57 befestigt sind. Aufgrund ihrer funktionalen Ausprägungen stellen die Justierträger 83, die Gelenkstellen 67 und die Stützen 85 ebenfalls Einstellmittel der Druckerführungsvorrichtung 9 dar.

Des Weiteren weist die Druckerführungsvorrichtung 9 eine Aufnahmevorrichtung 69 auf.

Diese Aufnahmevorrichtung 69 dient der temporären Aufnahme von Lagerbauteilen 35, 37. Hierbei ist das Lagerbauteil 35 ein Schwenklager, und das Lagerbauteil 37 ein Gleitlager. Durch das Verbauen der beiden Lagerbauteile 35, 37 kann sich nach der Fertigstellung das Betontragwerk 3 (nicht dargestellt), relativ zu den beiden Etagen E1, E2 bewegen. Um eine gute Verankerung der Lagerbauteile 35, 37 zu erreichen, weisen diese Löcher auf, welche als Anschlussstellen 105 zu Bewehrungsteilen 33 dienen, die von der Bewehrungszufuhrvorrichtung 31 zugeführt und in diese Anschlussstellen 105 eingeführt werden können.

Wie die Figur 3 unschwer erkennen lässt, ist eine Druckerführungsvorrichtung 9 dargestellt, welche vor dem Druckvorgang aufgebaut wird und dann nach Erstellung des Betontragwerkes 3 komplett demontiert werden kann. Somit verbleibt kein Teil der Druckerführungsvorrichtung 9 als Teil einer Bewehrung im erstellten Betontragwerk 3 zurück.

Die Figur 4 zeigt einen Abschnitt eines Betontragwerkes 3, anhand dessen die Einbringung von Bewehrungsteilen 33 besser erklärt werden soll. Die im verarbeiteten Beton 21 eingelassene, verbaute Bewehrung 29 sind verschieden geführte Bewehrungsdrähte 87, 89, 91. Zum einen verlaufen die Bewehrungsdrähte 87 parallel zur Längserstreckung des Betontragwerkes 3. In orthogonaler Richtung zu diesen Bewehrungsdrähten 87, sind weitere Bewehrungsdrähte 89 im Betontragwerk 3 angeordnet, welche die längsverlaufenden Bewehrungsdrähte 87 miteinander verbinden. Um Scherbeanspruchungen besser aufnehmen zu können, werden zudem während des Druckvorganges diagonal verlaufende Bewehrungsdrähte 91 in das Betontragwerk 3 eingebracht.

Um das in der Figur 4 dargestellte Betontragwerk 3 zu erzeugen, kann die in der Figur 1 dargestellte 3D-Betondruckereinrichtung 15 eine Druckerdüse 17 aufweisen, wie sie in der Figur 5 schematisch dargestellt ist. Die Druckerdüse 17 der Figur 5 ist U-förmig aufgebaut, wodurch der U-förmige Querschnitt des Betontragwerkes 3 erzeugt wird. An der U-förmig ausgebildeten Druckerdüse 17 schliesst ein Schlauch der Betonfördereinrichtung 73 an, durch den verarbeitbaren Beton der Druckerdüse 17 zugeführt werden kann. Die Druckerdüse 17 ist hierbei schwenkbar durch zwei Schwenklager 99 gelagert, so dass sie dem durch die Steuerungssoftware 27 (siehe Figur 1) vorgegebenen Druckvorgang 77 folgend, verschwenkt werden kann.

Wie in der Figur 4 beispielhaft dargestellt ist, werden durch die Druckerdüse 17 die Bewehrungsdrähte 87 zugeführt, welche parallel zur Längserstreckung im Betontragwerk 3 verbaut werden sollen. Diese Bewehrungsdrähte 87 werden mittels Drahtführungen 93 der ansonsten nicht dargestellten Bewehrungszuführvorrichtung 31 zugeführt. Hierbei durchragen die Bewehrungsdrähte 87 die Druckerdüse 17 an ihrer Vorderseite 107 und treten zusammen mit der von der Betonfördereinrichtung 73 zugeführten verarbeitbaren Betonmasse an der Rückseite 109 der Druckerdüse 17 aus dieser heraus und bilden dem Druckvorgang 77 folgend, das Betontragwerk 3. Aufgrund der U-förmigen Ausgestaltung der Druckerdüse 17 können während des Druckvorganges 77 kontinuierlich glattgestrichene Oberflächen am entstehenden Betontragwerk 3 erzeugt werden, so dass keine Nacharbeit der Oberflächen erforderlich ist. Allerdings schränkt eine solche Ausgestaltung der Druckerdüse 17 die Gestaltungsfreiheit der Oberflächen und insbesondere des Querschnittes des Betontragwerkes 3 ein.

Die Figur 6 zeigt schematisch eine mögliche Zuführeinheit 95 für Bewehrungsdrähte 89, die orthogonal zu den in Längsrichtung eingebrachten Bewehrungsdrähten 87 angeordnet werden sollen. Hierbei umläuft die Zuführeinheit 95 beispielsweise den U-förmigen Querschnitt periodisch und spult den Bewehrungsdraht 89 um die in Längsrichtung eingebrachten Bewehrungsdrähte 87.

Obwohl die Figuren 1 bis 6 unterschiedliche Aspekte der vorliegenden Erfindung anhand eines zu erstellenden Betontragwerkes 3 zeigen, welches vertikal voneinander beabstandete Etagen E1, E2 miteinander verbinden soll, ist es offensichtlich, dass die beschriebenen Verfahrensschritte und eine entsprechende Vorrichtung gleichermaßen auch für auf einer Ebene anzuordnende Betontragwerke Anwendung finden, wie sie beispielsweise für Fahrsteige verwendet werden. Zudem kann die Druckervorrichtung 1 weitere Funktionseinheiten wie beispielsweise eine Vorrichtung zum Glätten von Oberflächen aufweisen, mittels der der die Oberflächen des noch nicht abgebundenen, verarbeiteten Betons 21 des Betontragwerkes 3 bearbeitet werden können.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, sofern diese im Schutzbereich der Erfindung liegen, welche nur durch die beigefügten Ansprüche definiert wird. Bezugszeichen in den Ansprüchen sind nicht als Einschränkung anzusehen.

## Patentansprüche

1. Verfahren zur Erstellung eines Betontragwerkes (3) einer als Fahrtreppe oder Fahrsteig ausgestalteten Personentransportanlage (5), wobei in einem bestehenden Bauwerk (7) eine Druckervorrichtung (1) zum dreidimensionalen Betondrucken eingebracht wird, indem:
zwischen zwei zur Abstützung der Personentransportanlage (5) vorgesehenen Auflagerstellen (11, 13) des Bauwerkes (7) eine Druckerführungsvorrichtung (9) der Druckervorrichtung (1) angeordnet wird;
an dieser Druckerführungsvorrichtung (9) eine 3D-Betondruckereinrichtung (15) angeordnet wird, die zwischen den beiden Auflagerstellen (11, 13) an der Druckerführungsvorrichtung (9) entlang verschiebbar geführt ist; und
mit dieser Druckervorrichtung (1) durch einen Druckvorgang (77) ein Betontragwerk (3) erstellt wird, welches sich zwischen den beiden Auflagerstellen (11, 13) erstreckt.

2. Verfahren nach Anspruch 1, wobei beim Einbringen der Druckervorrichtung (1) deren Druckerführungsvorrichtung (9) mittels zur Druckerführungsvorrichtung (9) zugehörender Einstellmittel auf die beiden Auflagerstellen (11, 13) eingestellt und ausgerichtet werden kann, welche auf unterschiedlichen Etagen (E1, E2) angeordnet sind.

3. Verfahren nach Anspruch 1 oder 2, wobei zumindest ein Teil der Druckerführungsvorrichtung (9) als Bewehrung (29) oder Teil der Bewehrung (29) im Betontragwerk (3) verbleibt, in dem diese vor dem Druckvorgang (77) auf den Auflagerstellen (11, 13) des Bauwerkes (7) angeordnet wird und der verbleibende Teil der Druckerführungsvorrichtung (9) durch den Druckvorgang (77) im Betontragwerk (3) eingelassen wird.

4. Verfahren nach Anspruch 1 oder 2, wobei die Druckerführungsvorrichtung (9) der Druckervorrichtung (1) nur temporär zwischen den Auflagerstellen (11, 13) verbleibt, in dem diese vor dem Druckvorgang (77) beim Anordnen im Bauwerk (7) auf die Auflagerstellen (11, 13) ausgerichtet wird und nach dem Druckvorgang (77) wieder entfernt wird.

5. Verfahren nach einem der Ansprüche 1 bis 4, wobei gegebenenfalls unter Einbezug von Lagerbauteilen (35, 37) an einer der beiden Auflagerstellen (11, 13) ein Schwenklager (35) und an der anderen Auflagerstelle (11, 13) ein Gleitlager (37) während des Druckvorganges (77) am Betontragwerk (3) ausgebildet wird.

6. Verfahren nach einem der Ansprüche 1 bis 5, wobei das Betontragwerk (3) einen U-förmigen Querschnitt (45) mit zwei Seitenwänden (41) und einem Boden (43) aufweist und durch den Druckvorgang (77) in den Seitenwänden (41) Führungselemente (47) für bewegbare Bauteile der Personentransportanlage (5) ausgebildet werden.

7. Verfahren nach einem der Ansprüche 1 bis 6, wobei Aufnahmen (49) für Bauteile der Personentransportanlage (5) mitgedruckt werden, wobei in diese Aufnahmen (49) zumindest ein Befestigungselement (51) während des Druckvorganges (77) eingelassen wird.

8. Verfahren nach einem der Ansprüche 1 bis 7, wobei mittels einer Bewehrungszuführvorrichtung (31) der Druckervorrichtung (1) während des Druckvorganges (77) Bewehrungsmaterial (33) zugeführt wird.

## Claims

1. Method for building a concrete supporting structure (3) for a passenger transport system (5) designed as an escalator or moving walkway, wherein a printer device (1) for three-dimensional concrete printing is introduced into an existing structure (7) by:
arranging a printer guide device (9) of the printer device (1) between two support points (11, 13) of the structure (7), which are provided for supporting the passenger transport system (5); arranging a 3D concrete printer apparatus (15) on this printer guide device (9) and slidably guiding said apparatus along the printer guide device (9) between the two support points (11, 13); and
building a concrete supporting structure (3), which extends between the two support points (11, 13), by means of a printing process (77) using this printer device (1).

2. Method according to claim 1, wherein, when the printer device (1) is introduced, its printer guide device (9) can be adjusted and aligned with the two support points (11, 13), which are arranged on different floors (E1, E2), by means of adjustment means which are part of the printer guide device (9).

3. Method according to either claim 1 or claim 2, wherein at least part of the printer guide device (9) remains as a reinforcement (29) or part of the reinforcement (29) in the concrete supporting structure (3) by arranging this device on the support points (11, 13) of the structure (7) before the printing process (77) and inserting the remaining part of the printer guide device (9) into the concrete supporting structure (3) during the printing process (77).

4. Method according to either claim 1 or claim 2, wherein the printer guide device (9) of the printer device (1) only remains temporarily between the support points (11, 13) by aligning this guide device with the support points (11, 13) when it is arranged in the structure (7) before the printing process (77) and removing it again after the printing process (77).

5. Method according to any of claims 1 to 4, wherein, if including bearing components (35, 37), a pivot bearing (35) is formed at one of the two support points (11, 13) and a sliding bearing (37) is formed at the other support point (11, 13) on the concrete structure (3) during the printing process (77).

6. Method according to any of claims 1 to 5, wherein the concrete supporting structure (3) comprises a U-shaped cross section (45) having two side walls (41) and a base (43), and guide elements (47) for movable components of the passenger transport system (5) are formed in the side walls (41) during the printing process (77).

7. Method according to any of claims 1 to 6, wherein recesses (49) for components of the passenger transport system (5) are also printed, wherein at least one attachment element (51) is inserted into these recesses (49) during the printing process (77).

8. Method according to any of claims 1 to 7, wherein reinforcement material (33) is supplied by means of a reinforcement supply device (31) of the printer device (1) during the printing process (77).

## Revendications

1. Procédé pour la fabrication d'une structure porteuse en béton (3) d'une installation de transport de personnes (5) conçue comme un escalier roulant ou un trottoir roulant, un dispositif formant imprimante (1) permettant l'impression tridimensionnelle béton étant installé dans une construction (7) existante, par :
la disposition d'un dispositif de guidage d'imprimante (9) du dispositif formant imprimante (1) entre deux points d'appui (11, 13) de la construction (7) prévus pour le support de l'installation de transport de personnes (5) ;
la disposition, sur ledit dispositif de guidage d'imprimante (9), d'un appareil formant imprimante 3D béton (15), lequel appareil est guidé de manière à pouvoir coulisser le long du dispositif de guidage d'imprimante (9) entre les deux points d'appui (11, 13) ; et
la fabrication, par un processus d'impression (77) au moyen dudit dispositif formant imprimante (1), d'une structure porteuse en béton (3), laquelle s'étend entre les deux points d'appui (11, 13).

2. Procédé selon la revendication 1, dans lequel, lors de l'installation du dispositif formant imprimante (1), son dispositif de guidage d'imprimante (9) peut être réglé et orienté sur les deux points d'appui (11, 13) au moyen de moyens de réglage appartenant au dispositif de guidage d'imprimante (9), lesquels moyens de réglage sont disposés sur différents étages (E1, E2).

3. Procédé selon la revendication 1 ou 2, dans lequel au moins une partie du dispositif de guidage d'imprimante (9) reste dans la structure porteuse en béton (3) comme armature (29) ou comme partie de l'armature (29) par la disposition dudit dispositif de guidage d'imprimante sur les points d'appui (11, 13) de la construction (7) avant le processus d'impression (77) et par l'encastrement de la partie restante du dispositif de guidage d'imprimante (9) dans la structure porteuse en béton (3) par le processus d'impression (77).

4. Procédé selon la revendication 1 ou 2, dans lequel le dispositif de guidage d'imprimante (9) du dispositif formant imprimante (1) ne reste que temporairement entre les points d'appui (11, 13) par l'orientation dudit dispositif de guidage d'imprimante sur les points d'appui (11, 13) lors de la disposition dans la construction (7) avant le processus d'impression (77) et par son retrait après le processus d'impression (77).

5. Procédé selon l'une des revendications 1 à 4, dans lequel, éventuellement, en utilisant des pièces de palier (35, 37), un palier de pivotement (35) est formé sur l'un des deux points d'appui (11, 13) et un palier lisse (37) est formé sur l'autre point d'appui (11, 13) durant le processus d'impression (77) sur la structure porteuse en béton (3).

6. Procédé selon l'une des revendications 1 à 5, dans lequel la structure porteuse en béton (3) présente une section transversale (45) en forme de U comportant deux parois latérales (41) et un sol (43) et des éléments de guidage (47) pour des pièces mobiles de l'installation de transport de personnes (5) sont formés dans les parois latérales (41) par le processus d'impression (77).

7. Procédé selon l'une des revendications 1 à 6, dans lequel des logements (49) pour des pièces de l'installation de transport de personnes (5) sont imprimés conjointement, au moins un élément de fixation (51) étant encastré dans lesdits logements (49) durant le processus d'impression (77).

8. Procédé selon l'une des revendications 1 à 7, dans lequel du matériau d'armature (33) est amené au moyen d'un dispositif d'amenée d'armature (31) du dispositif formant imprimante (1) durant le processus d'impression (77).
